# EUROPÄISCHE PATENTANMELDUNG

(11) **EP 4 660 132 A1**
(43) Veröffentlichungstag der Anmeldung: **10.12.2025**
(21) Anmeldenummer: 24020178.0
(22) Anmeldetag: 03.06.2024
(51) Int. Cl.: C01B 3/22, C01B 3/32, C01B 3/38, C01B 3/48

(54) **VERFAHREN UND ANLAGE ZUR BEREITSTELLUNG EINES WASSERSTOFFPRODUKTS**

(71) Anmelder: Linde GmbH, 82049 Pullach (DE)
(72) Erfinder: Henes, Dino, 82049 Pullach (DE); Leitmayr, Werner, 82049 Pullach (DE); Ried, Thomas, 82049 Pullach (DE)
(74) Vertreter: Fischer, Werner

(57) **Zusammenfassung**

Die Erfindung betrifft ein Verfahren sowie eine Anlage (100, 200) zur Gewinnung eines Wasserstoffprodukts (P), bei dem Wasserstoff (102) aus einem Wasserstoff und zumindest einen Kohlenwasserstoff enthaltenden ersten Komponentengemisch (A) abgetrennt wird, um ein gegenüber dem ersten (A) an Wasserstoff abgereichertes zweites Komponentengemisch (B) zu bilden, das einem Reformierungsschritt (4) unterzogen wird, um ein drittes Komponentengemisch (C) zu erzeugen, das einen höheren Wasserstoff- und einen geringeren Kohlenwasserstoffgehalt als das zweite Komponentengemisch (B) aufweist, und von dem ein Wasserstoff und zumindest einen Kohlenwasserstoff enthaltendes Restgas (D) unter Erhalt wenigstens eines Teils (113) des Wasserstoffprodukts (P) abgetrennt wird, um es zu einem Wasserstoff und zumindest einen Kohlenwasserstoff enthaltenen Recyclegas (R) aufzubereiten. Kennzeichnend hierbei ist, dass das Wasserstoff und zumindest einen Kohlenwasserstoff enthaltene Recyclegas (R) mit einem Frischeinsatz (F), der Wasserstoff und wenigsten einen Kohlenwasserstoff umfasst, zum ersten Komponentengemisch (A) vereinigt wird.

## Beschreibung

Die Erfindung betrifft ein Verfahren zur Gewinnung eines Wasserstoffprodukts, bei dem Wasserstoff aus einem Wasserstoff und zumindest einen Kohlenwasserstoff enthaltenden ersten Komponentengemisch abgetrennt wird, um ein gegenüber dem ersten an Wasserstoff abgereichertes zweites Komponentengemisch zu bilden, das einem Reformierungsschritt unterzogen wird, um ein drittes Komponentengemisch zu erzeugen, das einen höheren Wasserstoff- und einen geringeren Kohlenwasserstoffgehalt als das zweite Komponentengemisch aufweist, und von dem ein Wasserstoff und zumindest einen Kohlenwasserstoff enthaltendes Restgas unter Erhalt wenigstens eines Teils des Wasserstoffprodukts abgetrennt wird, um es zu einem Wasserstoff und zumindest einen Kohlenwasserstoff enthaltenen Recyclegas aufzubereiten.

Weiterhin betrifft die Erfindung eine Vorrichtung zur Durchführung des erfindungsgemäßen Verfahrens.

Zur Bereitstellung von Wasserstoff können kohlenwasserstoffhaltige Einsätze beispielsweise mittels Dampfreformierung, partieller Oxidation, Autothermalalreformierung oder einer Kombination dieser Verfahren, die weiterhin mit einem Gas-Heated-Reformer kombiniert sein können, unter Bildung von Wasserstoff, Kohlenmonoxid und Kohlendioxid zu einem Rohsynthesegas reformiert werden. Dem Reformierungsschritt folgt eine katalytische Kohlenmonoxid-Konvertierung (CO-Shift), bei der ein wasserstoffreiches, Kohledioxid enthaltendes Synthesegas entsteht, das aufgrund reaktionskinetischer Limitierungen auch Kohlenmonoxid und nicht umgesetzte Kohlenwasserstoffe aufweist. Um ein Wasserstoffprodukt zu erhalten, wird üblicherweise das wasserstoffreiche Synthesegas durch Druckwechseladsorption (PSA) behandelt, wobei die Kohlenstoffverbindungen zusammen mit einem Teil des Wasserstoffs in ein PSA-Restgas überführt werden.

Überwiegend handelt es sich bei dem kohlenwasserstoffhaltigen Einsatz um Erdgas. Es können aber auch Restgase aus der Ethylenproduktion oder aus Raffinerieprozessen (continuous catalytic reforming, hydrodesulurization, hydrotreating, hydrocracking, fluid catalytic cracking, etc.) für die Wasserstoffproduktion verwendet werden, die neben Kohlenwasserstoffen auch erhebliche Wasserstoffanteile aufweisen. Da Wasserstoff im Reformierungsschritt inert ist, wird er üblicherweise in einem Vorbehandlungsschritt in Produktqualität aus dem Restgas abgetrennt, wenn sein Gehalt 25mol-% übersteigt, um einen kohlenwasserstoffhaltigen Einsatz für den Reformierungsschritt sowie einen Teil des Wasserstoffprodukts zu erhalten.

Neuerdings gewinnt die Erzeugung von sogenanntem blauem Wasserstoff an Bedeutung. Bei dieser wird angestrebt, durch geeignete Verfahrensschritte die Freisetzung von Kohlendioxid in die Atmosphäre so weit wie möglich zu vermeiden. Typischerweise wird das Kohlendioxid etwa mittels einer chemischen oder physikalischen Wäsche aus dem Rohsynthesegas oder dem wasserstoffreichen Synthesegas abgetrennt und nach Aufreinigung und ggf. Verflüssigung beispielsweise in einer Lagerstätte entsorgt oder einer stofflichen Nutzung zugeführt. Entscheidend ist es, den in den kohlenwasserstoffhaltigen Einsätzen enthaltenen Kohlenstoff möglichst vollständig als Kohlendioxid in das Rohsynthesegas bzw. das Synthesegas zu überführen. Zumindest ein Teil des Kohlenstoffverbindungen aufweisenden PSA-Restgases wird daher nach dem Stand der Technik verdichtet, zurückgeführt und zusammen mit dem kohlenwasserstoffhaltigen Einsatz dem Reformierungsschritt zugeführt, um die Kohlenstoffverbindungen zu Kohlendioxid umzusetzen und gleichzeitig die Wasserstoffausbeute zu erhöhen.

Da das PSA-Restgas hauptsächlich aus inertem Wasserstoff besteht, und jeweils weniger als 10mol-% Kohlenmonoxid und Kohlenwasserstoffe enthält, müssen die Reformierung sowie die weiter stromabwärts angeordneten Anlagenteile mit erheblichen Kosten weit stärker vergrößert werden, als es allein zur Umsetzung der Kohlestoffverbindungen notwendig ist.

Aufgabe der vorliegenden Erfindung ist es, ein Verfahren sowie eine Vorrichtung der gattungsgemäßen Art anzugeben, die eine gegenüber dem Stand der Technik wirtschaftlichere Gewinnung des Wasserstoffprodukts ermöglichen.

Verfahrensseitig wird die gestellte Aufgabe erfindungsgemäß dadurch gelöst, dass das Wasserstoff und zumindest einen Kohlenwasserstoff enthaltene Recyclegas mit einem Frischeinsatz, der Wasserstoff und wenigsten einen Kohlenwasserstoff umfasst, zum ersten Komponentengemisch vereinigt wird.

Das Wasserstoff und zumindest einen Kohlenwasserstoff enthaltene Recyclegas wird somit nicht unmittelbar vor den Reformierschritt sondern weiter stromaufwärts zurückgeführt. Gemeinsam mit dem Frischeinsatz wird das Recyclegas einer Wasserstoffabtrennung unterzogen, wodurch der im Recyclegas vorliegende Wassererstoff weitgehend abgetrennt und nicht in den Reformierungsschritt weitergeleitet wird, wo er lediglich einen unnötigen Ballast darstellen würde. Die für den Reformierschritt und weiter stromabwärts durchgeführte Verfahrensschritte werden daher mit weniger Gas belastet als in konventionellen Lösungen, so dass sie in kompakter und kostengünstiger ausgeführten Vorrichtungen durchgeführt werden können.

Falls der Frischeinsatz zur Bereitstellung des ersten Komponentengemischs wasserfrei ist, ist es sinnvoll, auch das PSA-Restgas durch Trocknung zum Recyclegas aufzubereiten. Dadurch können speziell für einen Winterbetrieb erforderliche Einrichtungen, wie etwa eine Begleitheizung für die Rückführleitung, entfallen.

Die typischerweise zur Gewinnung des PSA-Restgases verwendete Druckwechseladsorption kann mit erhöhtem Restgasdruck, der vorzugsweise zwischen 0,3 bar und 6 bar liegt, betrieben werden, so dass der Aufwand für eine Verdichtung des Recyclegases reduziert wird.

In bestimmten Ausgestaltungen des hier vorgeschlagenen Verfahrens ist vorgesehen, dass der Wasserstoff und wenigsten einen Kohlenwasserstoff umfassende Frischeinsatz als Restgas aus der Ethylenproduktion oder aus einem Raffinerieprozess zugeführt wird. Entsprechende Ausgestaltungen ermöglichen eine vorteilhafte Wasserstoffnutzung durch Abtrennung des im Frischeinsatz enthaltenen Wasserstoffs und der Gewinnung weiteren Wasserstoffs durch Umsetzen der enthaltenen Kohlenwasserstoffe.

In bestimmten Ausgestaltungen des hier vorgeschlagenen Verfahrens ist vorgesehen, dass der Wasserstoff aus dem ersten Komponentengemisch mit Produktreinheit abgetrennt und zur Bereitstellung des Wasserstoffprodukts verwendet wird.

In bestimmten Ausgestaltungen des hier vorgeschlagenen Verfahrens ist vorgesehen, dass das Bereitstellen des dritten Komponentengemischs die Umsetzung zumindest eines Teils des einen oder der mehreren Kohlenwasserstoffe zu Wasserstoff sowie Kohlendioxid und Kohlenmonoxid und insbesondere eine Umsetzung des Kohlenmonoxids oder eines Teils hiervon zu weiterem Wasserstoff und Kohlendioxid umfasst. Hierbei können grundsätzlich bekannte Schritte wie Dampfreformierung, Autothermalalreformierung oder partielle Oxidation zum Einsatz kommen, bei denen es sich um bewährte Verfahren zur Wasserstofferzeugung handelt. Als weitere Optionen können diese Verfahren mit einem Gas-Heated-Reformer kombiniert werden. Diesen kann eine Wassergas- bzw. Kohlenmonoxid-Shift nachgeschaltet sein, so dass die Ausbeute an Wasserstoff in dem Verfahren erhöht wird.

In bestimmten Ausgestaltungen des hier vorgeschlagenen Verfahrens ist vorgesehen, dass das Bereitstellen des dritten Komponentengemischs ferner eine Kohlendioxidentfernung umfasst, so dass das dritte Komponentengemisch im Wesentlichen frei von Kohlendioxid ist. Alternativ kann das Bereitstellen des dritten Komponentengemischs auch ohne Kohlendioxidentfernung erfolgen, so dass das dritte Komponentengemisch Kohlendioxid enthält. In letzterem Fall kann das PSA-Restgas oder ein Teil hiervon einer Kohlendioxidentfernung unterworfen werden, so dass das aus dem PSA-Restgas erhaltene Recyclegas im Wesentlichen von Kohlendioxid befreit wird. Jede der beiden Alternativen der Kohlendioxidentfernung kann je nach Einsatzszenario mehr oder weniger vorteilhaft sein.

In bestimmten Ausgestaltungen des hier vorgeschlagenen Verfahrens ist vorgesehen, dass die Kohlendioxidabtrennung unter Verwendung eines absorptiven und/oder adsorptiven Trennschritts und/oder durch ein Kondensationsverfahren und/oder ein Membrantrennverfahren vorgenommen wird.

In bestimmten Ausgestaltungen des hier vorgeschlagenen Verfahrens ist vorgesehen, dass die Kohlendioxidabtrennung die Bildung eines Kohlendioxidstroms umfasst, der einer Verdichtung und/oder Trocknung und danach insbesondere einer Sequestrierung unterworfen wird. Auf diese Weise ist eine Emission von Kohlendioxid in die Atmosphäre weitgehend vermeidbar.

Zur Steigerung des Wasserstoffproduktmenge kann in bestimmten Ausgestaltungen des hier vorgeschlagenen Verfahrens vorgesehen sein, dass dem zweiten Gasgemisch ein kohlenwasserstoffhaltiges Gas wie z.B. Erdgas zugemischt wird.

Die vorgeschlagene Anlage zur Gewinnung eines Wasserstoffprodukts weist eine Wasserstoffabtrennung, mit der aus einem Wasserstoff und zumindest einen Kohlenwasserstoff enthaltenden ersten Komponentengemisch durch die Abtrennung von Wasserstoff ein gegenüber dem ersten an Wasserstoff abgereichertes zweites Komponentengemisch gebildet werden kann, eine Reformiereinrichtung, mit deren Hilfe aus dem zweiten Komponentengemisch ein drittes Komponentengemisch erzeugt werden kann, das einen höheren Wasserstoff- und einen geringeren Kohlenwasserstoffgehalt als das zweite Komponentengemisch besitzt, eine Trenneinrichtung, in der aus dem dritten Komponentengemisch ein wenigstens einen Kohlenwasserstoff enthaltendes Restgas unter Erhalt zumindest eines Teils des Wasserstoffprodukts abtrennbar ist, sowie eine Restgasaufbereitung auf, mit der das Restgas zu einem Wasserstoff und zumindest einen Kohlenwasserstoff enthaltenen Recyclegas aufbereitet werden kann.

Die gestellte Aufgabe wird anlagenseitig erfindungsgemäß dadurch gelöst, dass sie eine Mischeinrichtung aufweist, in der das in der Restgasaufbereitung erhältliche, Wasserstoff und zumindest einen Kohlenwasserstoff enthaltende Recyclegas mit einem Frischeinsatz, der Wasserstoff und wenigsten einen Kohlenwasserstoff umfasst, zum ersten Komponentengemisch vereinigt werden kann.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

### Zeichnungen

Ausführungsformen von hier vorgeschlagenen Lösungen werden nachfolgend rein beispielhaft unter Bezugnahme auf die beigefügten Zeichnungen beschrieben, wobei
Figur 1 ein Verfahren zur Bereitstellung eines Wasserstoffprodukts veranschaulicht,
Figur 2 ein Verfahren gemäß einer Ausgestaltung veranschaulicht, und
Figur 3 ein Verfahren gemäß einer weiteren Ausgestaltung veranschaulicht.

### Ausführungsformen

Die nachfolgend beschriebenen Ausführungsformen und Ausgestaltungen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale vorgeschlagener Verfahren und Vorrichtungen nicht abschließend und/oder beschränkend betrachtet werden.

Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Ansprüche oder als Beschränkungen von Äquivalenten hierzu zu betrachten sind, und dass andere Ausführungsformen verwendet und Änderungen vorgenommen werden können, ohne vom Umfang der Ansprüche abzuweichen.

Erläuterungen, die sich auf Vorrichtungen, Apparate, Anordnungen, Systeme usw. gemäß vorgeschlagenen Ausführungsformen beziehen, können auch für Verfahren, Prozesse, Methoden usw. gemäß anderen Ausführungsformen gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

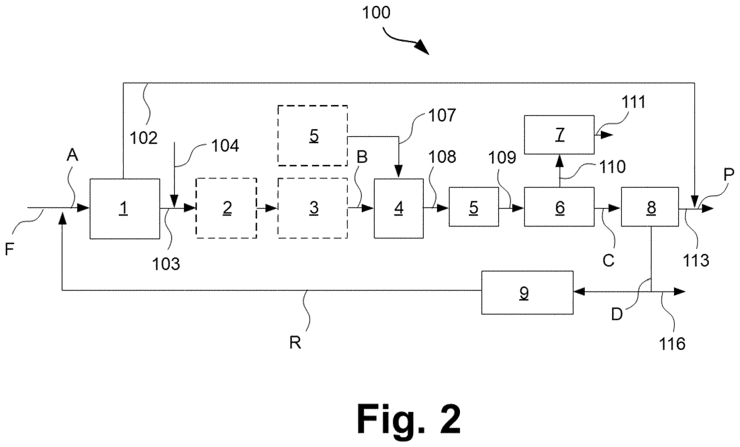

Verfahren zur Bereitstellung eines Wasserstoffprodukts sind vielfach in der Literatur beschrieben. Statt vieler sei auf den Artikel von A.O. Oni et al., "Comparative assessment of blue hydrogen from steam methane reforming, Autothermalal reforming, and natural gas decomposition technologies for natural gas-producing regions", Energy Conversion and Management 254 (2022) 115245, verwiesen, der in den Figuren 2 bis 4 solche Verfahren zeigt und in den jeweils zugehörigen Textpassagen beschreibt.

Aus Produktgemischen entsprechender Verfahren abgetrenntes Kohlendioxid wird typischerweise verdichtet, gereinigt, d.h. insbesondere getrocknet, und anschließend entweder in gasförmigem Zustand auf Pipelinedruck verdichtet und/oder verflüssigt und flüssig auf Druck gebracht und final sequestriert.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Wasserstoff") ergebenden obligatorischen Bestandteilen weitere Komponenten enthalten sein können, sofern sich die wesentlichen Merkmale der damit bezeichneten Zusammensetzung durch diese nicht signifikant ändern. Entsprechendes gilt auch Angaben wie "im Wesentlichen frei von" und dergleichen. Ein "im Wesentlichen" eine oder mehrere Komponenten enthaltendes oder aus diesen bestehendes Gas bzw. Gasgemisch kann insbesondere diese Komponenten zu mehr als 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 5, 1, 0,1 oder 0,01% dieser Komponenten in Summe oder als Einzelwerte enthält.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

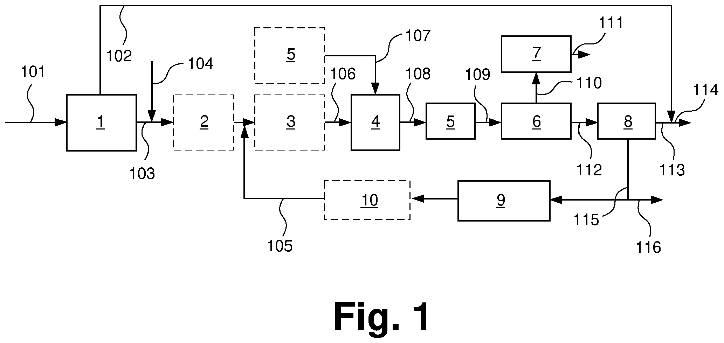

In Figur 1 ist ein Verfahren zur Bereitstellung eines Wasserstoffprodukts veranschaulicht, das keine erfindungsgemäße Ausgestaltung darstellt.

In dem Verfahren gemäß Figur 1 wird ein Frischeinsatz 101, der Wasserstoff und einen oder mehrere Kohlenwasserstoffe enthält, beispielsweise ein wasserstoffhaltiges Offgas aus einem Ethylen- oder einem Raffinerieprozess, einer Wasserstoffabtrennung 1 zugeführt, in der Wasserstoff aus dem Frischeinsatz 101 abgetrennt und in einen Wasserstoffstrom 102 überführt wird.

Es verbleibt ein Komponentengemisch 103, das gegenüber dem Frischeinsatz 101 an Wasserstoff abgereichert und an dem einen oder den mehreren Kohlenwasserstoffen angereichert ist. Dieses kann nach einer optionalen Zuspeisung eines weiteren Einsatzes 104, beispielsweise Erdgas, einer optionalen Einsatzvorbehandlung 2 und einer ebenfalls optionalen Präreformierung 3 unterworfen werden. Eine Vereinigung mit einem Recyclegas 105 kann in der dargestellten Weise erfolgen. Die jeweiligen Zwischenströme sind nicht gesondert bezeichnet.

Ein auf diese Weise bereitgestelltes Komponentengemisch 106 wird einer Umsetzung 4 unterworfen, die beispielsweise als Dampfreformierung, Autothermalreformierung, partielle Oxidation, alleine oder kombiniert mit einem Gas-Heated-Reformer ausgeführt werden oder entsprechende Schritte umfassen kann. Im Fall einer partiellen Oxidation oder der Autothermalreformierung wird ein Sauerstoffstrom 107 verwendet, der beispielsweise aus einer Luftzerlegung 5 stammt.

Ein der Umsetzung 4 entnommenes Komponentengemisch 108, das Wasserstoff, Kohlenmonoxid und Kohlendioxid umfasst, sowie nicht umgesetzte Kohlenwasserstoffe aus dem Komponentengemisch 106, wird im dargestellten Beispiel einer Wassergas- bzw. Kohlenmonoxid-Shift 5 unterworfen, in der Kohlenmonoxid unter Erhalt von weiterem Wasserstoff zu Kohlendioxid umgesetzt wird.

Auf diese Weise wird ein weiteres Komponentengemisch 109 gebildet, das einer Kohlendioxidentfernung 6 unterworfen wird, in welcher ein Kohlendioxidstrom 110 gebildet wird. Der Kohlendioxidstrom 110 kann in einer Kohlendioxidverdichtung und/oder Kohlendioxidtrocknung 7 zu einem aufbereiteten Kohlendioxidstrom 111 aufbereitet werden. Es verbleibt ein weiteres Komponentengemisch 112.

Das Komponentengemisch 112 wird einer Wasserstoffabtrennung 8 zugeführt, in der ein Wasserstoffstrom 113 gebildet wird, der zusammen mit dem Wasserstoffstrom 102 zur Bereitstellung des Wasserstoffprodukts 114 verwendet wird. Es verbleibt ein Komponentengemisch 115, das gegenüber dem Komponentengemisch 112 an Wasserstoff abgereichert ist.

Ein Teil 116 des Komponentengemischs 115 kann beispielsweise als Brenngas verwendet werden. Ein weiterer Teil kann einer Verdichtung 9 unterworfen und danach, nach einer optionalen Membrantrennung 10, als das bereits zuvor erwähnte Recyclegas 105 verwendet werden.

Das in Figur 1 dargestellte Verfahren dient damit zur Herstellung von blauem Wasserstoff aus einem wasserstoffhaltigen Frischeinsatz 101, beispielsweise einem bereits erwähnten Offgas. Dieses umfasst neben Wasserstoff unterschiedliche Kohlenwasserstoffe. Die als Quelle erwähnten Raffinerieprozesse stellen nur Beispiele dar und können beispielsweise eine kontinuierliche katalytische Reformierung, Hydrodesulfurierung, Hydrotreating, Hydrocracking, Fluid Catalytic Cracking und dergleichen darstellen oder entsprechende Schritte umfassen. Alternativ oder zusätzlich kann beispielsweise das Offgas eines Ethylencrackers verwendet werden. Allgemein kann von wasserstoffreichen Offgasen gesprochen werden, die beispielsweise auch aus einer Methanolherstellung stammen können.

Die Wasserstoffabtrennung 1 aus dem als Frischeinsatz 101 verwendeten Offgas kann insbesondere mittels Adsorption und/oder Membranverfahren und/oder kryogener Kondensation erfolgen. Eine Verdichtung des Komponentengemischs 103 kann vorgesehen sein. Je nach Verfügbarkeit des Frischeinsatzes 101 und dem Wasserstoffbedarf, kann zusätzlich Erdgas 104 oder dergleichen zugespeist werden. Die Vorbehandlung 2 kann, je nach Gaszusammensetzung, beispielsweise eine Entschwefelung, oder ein Hydrieren von ungesättigten Kohlenwasserstoffen und/oder Schwefelkomponenten umfassen. Die Prereformierung 3 kann vorteilhaft sein, da in der Prereformierung 3 insbesondere höherkettige Kohlenwasserstoffe mit Wasserdampf katalytisch zu Methan und Wasserstoff umgewandelt werden können.

Die Wassergas- bzw. Kohlenmonoxid-Shift 5 kann beispielsweise als Hochtemperatur-, Mitteltemperatur-, Niedertemperatur- oder Isothermal-Shift oder einer Kombination dieser erfolgen. Die Kohlendioxidentfernung 6 kann ab- oder adsorptiv erfolgen. Die Wasserstoffabtrennung 8 erfolgt typischerweise mittels Druckwechseladsorption. Teil Teil 116 des Komponentengemischs 115, dem Restgas aus der Wasserstoffabtrennung, kann, wie erwähnt, zur Unterfeuerung in einem befeuerten Erhitzer eingesetzt werden. Dieser kann beispielsweise zur Einsatzanwärmung und optional zur Dampferzeugung oder Dampfüberhitzung verwendet werden. Da in der Regel der Bedarf an Brenngas geringer als die zur Verfügung stehende Menge ist, wird der Rest des Restgases verdichtet und in Form des Stoffstroms 105 recycelt.

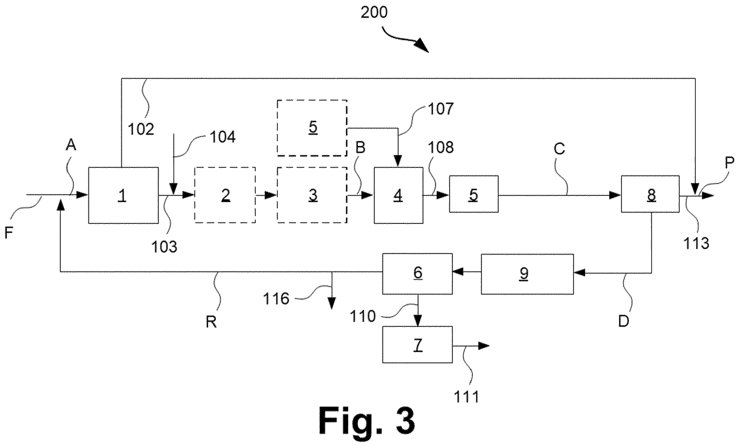

Um die Recyclemenge zu minimieren, kann das Restgas 115 nach der Verdichtung 9 optional aufbereitet werden, z.B. mittels Membranverfahren 10. Dort kann das Gas in eine wasserstoffreiche und in eine kohlenstoffreiche Fraktion getrennt werden. Die wasserstoffreiche Fraktion kann als Brenngas verwendet werden und die kohlenstoffreiche Fraktion kann recycelt bzw. einer separaten Druckwechseladsorption zugeführt werden, um zusätzliches Wasserstoffprodukt zu generieren (aus Gründen der Übersichtlichkeit nicht dargestellt). Je nach Anforderung und Gaszusammensetzung kann das Recyclegas 105 stromauf der Prereformierung 103, wie in Figur 3 dargestellt, stromauf der Umsetzung 4 stromauf der Wassergas- bzw. Kohlenmonoxidshift 5 eingebunden werden. Alternativ kann das Recyclegas 105 auch direkt nach stromauf der Wasserstoffabtrennung 8 recycelt werden, sprich zum Einsatz dieser zu gemischt werden, wodurch die Wasserstoff-Gesamtausbeute gesteigert wird.

Durch den Recycle wird generell der Kohlendioxid-Fußabdruck der Gesamtanlage reduziert. Zum einen ist durch die Steigerung der Wasserstoffausbeute weniger kohlenwasserstoffhaltiges Frischgas nötig. Zum anderen erhöht sich der Umsatz von Kohlenwasserstoffen und Kohlenmonoxid, so dass mehr Kohlendioxid entsteht, welches in der Kohlendioxidentfernung 6 abgetrennt werden kann.

In dem in Figur 1 veranschaulichten Verfahren wird also ein Recycle des Restgases 115 bzw. dessen als Recyclegas 105 verwendeten Teils des Restgases nach stromauf der Reformierung bzw. Umsetzung 4 gezeigt. Dadurch wird die gesamte Kette der Synthesegaserzeugung mit hohen Gasmengen belastet, da dieser Strom hauptsächlich Wasserstoff und jeweils nur weniger als 10 mol-% Kohlenmonoxid und weniger als 10 mol-% Methan beinhaltet. Dieser Umstand stellt einen wesentlichen Nachteil dar.

Um diesen Nachteil zu umgehen, wird eine neue, optimierte Prozessführung vorgeschlagen. Hierbei wird das Recyclegas 105 nicht unmittelbar vor die Reformierung bzw. Umsetzung 4 eingebunden, sondern vor die Wasserstoffabtrennung 1.

Dies ist in Figur 2 in Form eines Verfahrens 100 veranschaulicht, dessen Schritte identisch wie in Figur 1 mit 1 bis 9 bezeichnet sind, und die im Wesentlichen wie zuvor erläutert ablaufen. Entsprechendes gilt auch für die Stoffströme bzw. Komponentengemische 101 bis 116, wobei diese jedoch teilweise aufgrund der abweichenden Verfahrensführung unterschiedliche Gehalte an den jeweiligen Komponenten aufweisen.

Bei der Beschreibung der hier vorgeschlagenen Ausgestaltungen wurden zuvor und werden nachfolgend bestimmte spezifische Bezeichnungen verwendet, wobei in den Figuren 2 und 3 sowie an anderen Stellen der vorliegenden Beschreibung hierfür Großbuchstaben eingesetzt werden.

In dem in Figur 2 veranschaulichten Verfahren ist der Frischeinsatz anstelle von 101 mit F bezeichnet. In dem Verfahren 100 wird unter Verwendung des Frischeinsatzes F und des Recyclegases, der hier anstelle von 105 mit R bezeichnet ist, ein Gemisch gebildet, das als "erstes Komponentengemisch" A bezeichnet wird. Dieses weist Wasserstoff und einen oder mehrere Kohlenwasserstoffe auf.

Das der Umsetzung 4 unterworfene Komponentengemisch, in Figur 1 mit 106 bezeichnet, wird dagegen bei Bezugnahme auf hier vorgeschlagene Ausgestaltungen als "zweites Komponentengemisch" B bezeichnet. Es wird unter Verwendung des ersten Komponentengemischs A oder eines Teils hiervon bereitgestellt, wobei die Bereitstellung im dargestellten Beispiel die Wasserstoffabtrennung 1 und die optionalen Schritte 2 und 3, die oben genauer erläutert wurden, umfasst. Das zweite Komponentengemisch B weist aufgrund der Wasserstoffabtrennung 1 einen geringeren Gehalt an Wasserstoff und einen höheren Gehalt an dem einen oder den mehreren Kohlenwasserstoffen als das erste Komponentengemisch A auf.

Das der Wasserstoffabtrennung 8 unterworfene Komponentengemisch, in Figur 1 mit 112 bezeichnet, wird entsprechend bei Bezugnahme auf hier vorgeschlagene Ausgestaltungen als "drittes Komponentengemisch" C bezeichnet. Es wird unter Verwendung des zweiten Komponentengemischs B oder eines Teils hiervon gebildet, wobei in dem in Figur 2 veranschaulichten Beispiel die Umsetzung 4, die Wassergas- bzw. Kohlenmonoxid-Shift 5, und die Kohlendioxidabtrennung 6 zum Einsatz kommen. Jedenfalls enthält das dritte Komponentengemisch C einen höheren Gehalt an Wasserstoff und einen geringeren Gehalt an dem einen oder den mehreren Kohlenwasserstoffen als das zweite Komponentengemisch B.

Das mittels der Wasserstoffabtrennung 8 abgetrennte Restgas, in Figur 1 mit 115 bezeichnet, wird entsprechend bei Bezugnahme auf hier vorgeschlagene Ausgestaltungen mit D bezeichnet. Die Bereitstellung erfolgt somit unter Verwendung des dritten Komponentengemischs C oder eines Teils hiervon, wobei Restgas D einen geringeren Gehalt an Wasserstoff und einen höheren Gehalt an dem einen oder den mehreren Kohlenwasserstoffen als das dritte Komponentengemisch C aufweist.

Das Wasserstoffprodukt, zuvor mit 114 bezeichnet, ist bei Bezugnahme auf die hier vorgeschlagenen Ausgestaltungen mit P angegeben.

Wie mit anderen Worten bereits mehrfach ausgeführt, erfolgt das Bereitstellen des ersten Komponentengemischs A unter Verwendung des vierten Komponentengemischs D oder eines Teils hiervon, nämlich in Form des Recyclegases R, ggf. abzüglich des Anteils 116.

In Figur 3 ist eine Alternative in Form eines Verfahrens 200 veranschaulicht, dessen Schritte wiederum identisch wie in den Figuren 1 und 2 mit 1 bis 9 bezeichnet sind, und die im Wesentlichen wie zuvor erläutert ablaufen.

Jedoch sind in Verfahren 200 die Wasserstoffabtrennung 8 und die Kohlenstoffentfernung 6 positionsmäßig vertauscht, so dass das der Wassergas- bzw. Kohlenmonoxid-Shift 5 entnommene Gasgemisch, zuvor mit 109 bezeichnet, direkt als das "dritte Komponentengemisch" C verwendet und der Wasserstoffabtrennung 8 zugeführt wird. Die weiteren Stoffströme 113 bis 115 sind, trotz ggf. abweichender Zusammensetzung, wie zuvor bezeichnet.

## Patentansprüche

1. Verfahren (100, 200) zur Gewinnung eines Wasserstoffprodukts (P), bei dem Wasserstoff (102) aus einem Wasserstoff und zumindest einen Kohlenwasserstoff enthaltenden ersten Komponentengemisch (A) abgetrennt wird, um ein gegenüber dem ersten (A) an Wasserstoff abgereichertes zweites Komponentengemisch (B) zu bilden, das einem Reformierungsschritt (4) unterzogen wird, um ein drittes Komponentengemisch (C) zu erzeugen, das einen höheren Wasserstoff- und einen geringeren Kohlenwasserstoffgehalt als das zweite Komponentengemisch (B) aufweist, und von dem ein Wasserstoff und zumindest einen Kohlenwasserstoff enthaltendes Restgas (D) unter Erhalt wenigstens eines Teils (113) des Wasserstoffprodukts (P) abgetrennt wird, um es zu einem Wasserstoff und zumindest einen Kohlenwasserstoff enthaltenen Recyclegas (R) aufzubereiten, **dadurch gekennzeichnet, dass** das Wasserstoff und zumindest einen Kohlenwasserstoff enthaltene Recyclegas (R) mit einem Frischeinsatz (F), der Wasserstoff und wenigsten einen Kohlenwasserstoff umfasst, zum ersten Komponentengemisch (A) vereinigt wird.

2. Verfahren (100, 200) nach Anspruch 1, wobei der Frischeinsatz (F) als Restgas einem Ethylen- oder einem Raffinerieprozess entnommen wird.

3. Verfahren (100, 200) nach Anspruch 1 oder 2, wobei das Bereitstellen des zweiten Komponentengemischs (B) eine Wasserstoffabtrennung (1) unter Bildung eines Wasserstoffstroms (102) umfasst, der insbesondere zur Bereitstellung des Wasserstoffprodukts (P) verwendet wird.

4. Verfahren (100, 200) nach einem der vorstehenden Ansprüche, wobei das Bereitstellen des dritten Komponentengemischs (C) eine teilweise Umsetzung (4) des einen oder der mehreren Kohlenwasserstoffe (3, 4) zu Wasserstoff sowie Kohlendioxid und Kohlenmonoxid und insbesondere eine Umsetzung des Kohlenmonoxids oder eines Teils hiervon zu weiterem Wasserstoff und Kohlendioxid umfasst.

5. Verfahren (100) nach Anspruch 4, wobei das Bereitstellen des dritten Komponentengemischs (C) ferner eine Kohlendioxidentfernung (6) umfasst, so dass das dritte Komponentengemisch (C) im Wesentlichen frei von Kohlendioxid ist.

6. Verfahren (200) nach Anspruch 4, wobei das Bereitstellen des dritten Komponentengemischs (C) ohne Kohlendioxidentfernung (6) erfolgt, so dass das dritte Komponentengemisch (C) Kohlendioxid enthält.

7. Verfahren (200) nach Anspruch 6, wobei das Wasserstoff und zumindest einen Kohlenwasserstoff enthaltende Restgas (D) oder ein Teil hiervon bei der Aufbereitung zum Recyclegas (R) einer Kohlendioxidentfernung (6) unterworfen wird.

8. Verfahren (100, 200) nach einem der Ansprüche 5 bis 7, wobei die Kohlendioxidabtrennung (6) unter Verwendung eines absorptiven und/oder adsorptiven und/oder Membrantrennschritts und/oder Kondensation vorgenommen wird.

9. Verfahren (100, 200) nach Anspruch 8, wobei die Kohlendioxidabtrennung (6) die Bildung eines Kohlendioxidstroms (110) umfasst, der einer Verdichtung und/oder Trocknung (7) und/oder Verflüssigung und danach insbesondere einer Sequestrierung unterworfen wird.

10. Verfahren (100, 200) nach einem der vorstehenden Ansprüche, wobei das Bereitstellen des Wasserstoff und zumindest einen Kohlenwasserstoff enthaltenden Restgases (D) eine Wasserstoffabtrennung (8) unter Bildung eines Wasserstoffstroms (113) umfasst, der insbesondere zur Bereitstellung des Wasserstoffprodukts (P) verwendet wird.

11. Verfahren (100, 200) nach Anspruch 10, wobei die Wasserstoffabtrennung (8) unter Verwendung einer Druckwechseladsorption erfolgt.

12. Anlage (100, 200) zur Gewinnung eines Wasserstoffprodukts (P), aufweisend eine Wasserstoffabtrennung (1), mit deren Hilfe aus einem Wasserstoff und zumindest einen Kohlenwasserstoff enthaltenden ersten Komponentengemisch (A) Wasserstoff (102) abgetrennt werden kann, um ein gegenüber dem ersten (A) an Wasserstoff abgereichertes zweites Komponentengemisch (B) zu bilden, eine Reformiereinrichtung (4), mit deren Hilfe der aus dem zweiten Komponentengemisch (B) ein drittes Komponentengemisch (C) erzeugt werden kann, das einen höheren Wasserstoff- und einen geringeren Kohlenwasserstoffgehalt als das zweite Komponentengemisch (B) besitzt, eine Trenneinrichtung (8), mit deren Hilfe aus dem dritten Komponentengemisch ein wenigstens einen Kohlenwasserstoff enthaltendes Restgas (D) unter Erhalt zumindest eines Teils (113) des Wasserstoffprodukts (P) abtrennbar ist, sowie eine Restgasaufbereitung (9, 6), mit der das Restgas(D) zu einem Wasserstoff und zumindest einen Kohlenwasserstoff enthaltenen Recyclegas (R) aufbereitet werden kann, **dadurch gekennzeichnet, dass** sie eine Mischeinrichtung aufweist, in der das in der Restgasaufbereitung (9, 6) erhältliche, Wasserstoff und zumindest einen Kohlenwasserstoff enthaltende Recyclegas (R) mit einem Frischeinsatz (F), der Wasserstoff und wenigsten einen Kohlenwasserstoff umfasst, zum ersten Komponentengemisch (A) vereinigt werden kann.

13. Anlage nach Anspruch 12, die zur Durchführung eines Verfahrens nach einem der Ansprüche 1 bis 11 eingerichtet ist.
